# EUROPÄISCHE PATENTSCHRIFT

(11) **EP 3 180 243 B1**
(45) Veröffentlichungstag und Bekanntmachung des Hinweises auf die Patenterteilung: **13.03.2019**
(21) Anmeldenummer: 15756824.7
(22) Anmeldetag: 11.08.2015
(51) Int. Cl.: B64C 9/16, B64C 9/32

(54) **STEUERFLÄCHENELEMENT FÜR EIN FLUGZEUG**
CONTROL SURFACE ELEMENT FOR AN AIRPLANE
ÉLÉMENT DE GOUVERNE POUR AÉRONEF

(30) Priorität: 11.08.2014 AT 505572014
(43) Veröffentlichungstag der Anmeldung: 21.06.2017
(73) Patentinhaber: FACC AG, 4910 Ried im Innkreis (AT)
(72) Erfinder: SEIS, Michael, A-2483 Ebreichsdorf (AT); MEINDLHUMER, Martin, A-4701 Bad Schallerbach (AT)
(74) Vertreter: Sonn & Partner Patentanwälte
(86) Internationale Anmeldenummer: PCT/AT2015/050196
(87) Internationale Veröffentlichungsnummer: WO 2016/023056

(56) Entgegenhaltungen:
- EP-A2- 1 227 035
- EP-A2- 2 862 798
- US-A1- 2009 072 090
- US-B2- 8 245 971

## Beschreibung

Die Erfindung betrifft ein Steuerflächenelement gemäß dem Oberbegriff von Anspruch 1.

Aus der US 8,245,971 B2 ist eine Steuerfläche bekannt geworden, bei welcher die Außen- und die Innenseite jeweils mit einer Versteifungsstruktur ausgebildet sind. Die Versteifungen sind in die Oberflächen der Steuerfläche integriert. Die Steuerfläche wird durch eine Außenplatte und eine Innenplatte gebildet, welche beispielsweise im RTM-Verfahren ("Resin Transfer Moulding") vorgefertigt werden. Bei diesem Stand der Technik werden als Versteifungen langgestreckte Profilierungen der Außen- bzw. Innenplatte vorgesehen, welche sich an der Außen- bzw. Innenplatte im Wesentlichen rechtwinkelig zueinander erstrecken.

Die bekannte Ausführung ist jedoch auf die Einleitung gleichmäßig verteilter Lasten ausgelegt, welche im Wesentlichen linienförmig an den Bauteilrändern abgetragen werden. Dagegen ist die bekannte Ausführung wenig geeignet, ungleichförmig verteilte Lasten mit einer gewichtsoptimierten Ausführung abzutragen. Die bekannte Ausführung hat daher den Nachteil, dass die Anordnung der Versteifungen auf ungleichmäßige Belastungen im Flugbetrieb nicht optimal ausgelegt ist. Als nachteilig hat sich insbesondere herausgestellt, dass die Lasteinleitung durch die Lagerung der Steuerfläche am Flugzeugflügel nicht ausreichend berücksichtigt wird. Darüber hinaus ist eine vergleichsweise große Anzahl von Versteifungen erforderlich, welche nachteiligerweise den Fertigungsaufwand und das Gewicht erhöhen.

Die AT 409 482 B (bzw. EP 1 227 035 A2) offenbart einen Spoiler, welcher einen Beschlag mit zwei Lagern und ein Gelenk aufweist. Darüber hinaus sind sternförmig vom Gelenk ausgehende Versteifungsstrukturen vorgesehen. Der Spoiler kann nach dem RTM-Verfahren in einem

Vorgang mit dem Beschlag als Faserverbundbauteil hergestellt werden. Dieser Spoiler weist jedoch ein vergleichsweise hohes Gewicht auf.

In der US 6,270,039 B1 werden Beschläge für die Anbindung einer Steuerfläche am Flugzeugflügel beschrieben.

Die US 2009072090 A1 und US 2013/011605 A1 zeigen Steuerflächen mit andersartigen Verstärkungselementen.

Demnach besteht die Aufgabe der vorliegenden Erfindung darin, die Nachteile des Standes der Technik zu lindern bzw. zu beseitigen.

Diese Aufgabe wird durch ein Steuerflächenelement mit den Merkmalen von Anspruch 1 gelöst. Bevorzugte Ausführungsformen sind in den abhängigen Ansprüchen angegeben.

Erfindungsgemäß weist die Versteifungsstruktur ein zur Aufnahme von Hauptlasten eingerichtetes Primärversteifungselement auf, welches mit zumindest einem zur Aufnahme von Nebenlasten eingerichteten Sekundärversteifungselement verbunden ist, wobei das Faserverbundelement zur integralen Ausbildung des Primärversteifungselements eine Einbuchtung aufweist.

Die Erfindung beruht daher darauf, dass die im Betrieb über die Lagereinrichtung in das Faserverbundelement eingeleiteten Kräfte nicht wie beim Stand der Technik über mehrere gleichartige Versteifungen aufgenommen werden, sondern dass erfindungsgemäß die Hauptlast auf ein Primärversteifungselement übertragen wird, welches zur Aufnahme von Nebenlasten mit zumindest einem Sekundärversteifungselement verbunden ist. Erfindungsgemäß ist das Faserverbundelement für einen Kraftfluss von der Lagereinrichtung über das Primärversteifungselement zu dem Sekundärversteifungselement eingerichtet. Das Primärversteifungselement ist als zentrale Aussteifung des Steuerflächenelements ausgebildet, welche das Rückgrat ("backbone") des Steuerflächenelements bildet. Zu diesem Zweck weist das Primärversteifungselement bevorzugt eine langgestreckte Form auf, wobei das Sekundärversteifungselement schwächer als das Primärversteifungselement ausgebildet ist, um die vom Primärversteifungselement reduzierten Lasten aufzunehmen. Zu diesem Zweck weist das Primärversteifungselement eine größere Breite und/oder eine größere Höhe als das Sekundärversteifungselement auf. Vorzugsweise sind mehrere, insbesondere viele, Sekundärversteifungselemente vorgesehen, welche insbesondere auf gegenüberliegenden Seiten, d.h. zur vorderen und hinteren Längsseite des Faserverbundelements hin, angeordnet sind. Die Versteifungsstruktur mit den verschiedenen Versteifungselementen ist aus faserverstärktem Kunststoff gefertigt. Zur integralen Ausbildung des Primärversteifungselements an dem Steuerflächenelement weist das Faserverbundelement erfindungsgemäß eine Einbuchtung auf. Dadurch kann eine besonders leichte Ausführung erzielt werden, ohne die Steifigkeit des Steuerflächenelements zu beeinträchtigen. Für die Zwecke dieser Offenbarung wird unter der integralen bzw. einteiligen Ausbildung des Versteifungselements verstanden, dass das Versteifungselement zusammen mit dem Faserverbundelement in Faserverbundbauweise hergestellt wird. Im Unterschied dazu werden bei einer zweiteiligen Ausführung eigene Faserverbundbauteile erzeugt, welche danach auf geeignete Weise, beispielsweise über Klebeverbindungen, miteinander verbunden werden.

Das Sekundärversteifungselement ist als Abzweigung des Primärversteifungselements ausgebildet. Demnach ist das Sekundärversteifungselement in der Art einer Rippe von dem als Rückgrat der Versteifungsstruktur ausgebildeten Primärversteifungselement abgezweigt. Das Sekundärversteifungselement kann einen T-, L-, U- oder I-förmigen Querschnitt aufweisen.

Die erfindungsgemäße Ausführung hat sich bei umfangreichen theoretischen Untersuchungen überraschend als besonders günstig erwiesen, um den im Flugbetrieb auftretenden Kräften standhalten zu können. Das erfindungsgemäße Steuerflächenelement ermöglicht insbesondere, ungleichförmig verteilte Lasten mit einer gewichtsoptimierten Ausführung abzutragen. Weiters kann die Lastabtragung konzentriert auf einen oder mehrere Punkte hin erfolgen. Vorteilhaft ist zudem, dass die Anzahl der notwendigen Versteifungselemente wesentlich reduziert werden kann. Dadurch kann einerseits der Fertigungsaufwand reduziert werden. Andererseits kann eine besonders gewichtssparende Konstruktion erzielt werden, welche den anhaltenden Bemühungen der Flugzeughersteller um eine Verringerung des Treibstoffverbrauchs Rechnung trägt. Durch die Integration zumindest eines der Versteifungselemente, insbesondere des Primärversteifungselements, in die Herstellung des Steuerflächenelements kann vorteilhafterweise der Fertigungsaufwand reduziert werden. Darüber hinaus kann der Zusammenhalt des Steuerflächenelements, insbesondere bei größeren Schäden, gestärkt werden. Dadurch wird ein wesentlicher Vorteil gegenüber bekannten Sandwich-Konstruktionen mit Wabenkern ("honeycomb core") erzielt. Zur integralen Ausbildung des zumindest einen Versteifungselements, insbesondere des Primärversteifungselements, in dem Steuerflächenelement kann insbesondere das RTM-Verfahren ("Resin Transfer Moulding"), das Verfahren der EP 1 181 149 B1 oder das in der AT 511 113 B beschriebene Verfahren verwendet werden. Die erfindungsgemäße Ausgestaltung des Steuerflächenelements eignet sich besonders gut für eine Bremsklappe ("Spoiler"), welche eine Ausführungsvariante einer Störklappe darstellt. Die gegenständliche Erfindung eignet sich grundsätzlich für weitere verschiedene Typen von Steuerflächen ("control surfaces") wie Querruder ("aileron"), Höhenruder ("horizontal stabilizer") oder Seitenruder ("vertical stabilizer").

Um das Primärversteifungselement für höhere Lasten als das Sekundärversteifungselement auszulegen, ist es günstig, wenn das Primärversteifungselement eine größere Breite und/oder Höhe als das Sekundärversteifungselement aufweist. Demnach werden die im Bereich der Lagereinrichtung aufgenommenen Lasten hauptsächlich von dem Primärversteifungselement aufgefangen, welches zu diesem Zweck entsprechend stärker als das Sekundärversteifungselement ausgebildet ist.

Vor allem bei einer Ausführung des Steuerflächenelements als Störklappe ist es vorteilhaft, wenn die Lagereinrichtung ein im Wesentlichen mittig an einer vorderen Längskante des Faserverbundelements vorgesehenes Lagerelement aufweist, an welches ein Zentralabschnitt des Primärversteifungselements anschließt. Das Lagerelement ist, wie im Stand der Technik üblich, zur verschwenkbaren Lagerung an dem Strukturbauteil eingerichtet, welches im Fall der Bremsklappe durch den Flugzeugflügelkasten gebildet ist. Ein solches Lagerelement in Form eines Beschlages wird in der AT 409 482 B beschrieben. Das Lagerelement wird bevorzugt aus Faserverbundwerkstoff, beispielsweise im Resin Transfer Moulding (RTM)-Verfahren, hergestellt. Durch die Anordnung des Zentralabschnitts des Primärversteifungselements unmittelbar benachbart des Lagerelements können die in diesem Bereich auftretenden Lasten zuverlässig aufgenommen werden, wobei eine Ableitung von Nebenlasten in das Sekundärversteifungselement erfolgt. Zu diesem Zweck ist nur das Primärversteifungselement, nicht aber das Sekundärversteifungselement an das mittige Lagerelement des Steuerflächenelements angeschlossen. Darüber hinaus kann die Lagereinrichtung, wie im Stand der Technik ebenfalls üblich, an den seitlichen Enden der vorderen Längskante des Faserverbundelements weitere Lagerelemente aufweisen, an welche bevorzugt jeweils zumindest ein Versteifungselement, insbesondere ein Sekundärversteifungselement, angrenzt.

Um die am Lagerelement angreifenden Hauptlasten seitlich abzuleiten, ist es vorteilhaft, wenn das Primärversteifungselement von dem Zentralabschnitt zu Schmalseiten des Faserverbundelements hin verlaufende Seitenabschnitte aufweist. Zur Verteilung der Hauptlasten ist es dabei günstig, wenn sich das Primärversteifungselement an den Seitenabschnitten ausgehend von dem Zentralabschnitt nach hinten, d.h. weg von der vorderen Längskante des Faserverbundelements, erstreckt. Das Primärversteifungselement kann an den Seitenabschnitten bogenförmig gekrümmt sein. Alternativ kann das Primärversteifungselement geradlinig verlaufende Längsseiten aufweisen.

Um den Kraftfluss in dem Faserverbundelement möglichst gleichmäßig zu verteilen, ist es günstig, wenn die Seitenabschnitte des Primärversteifungselements benachbart der Schmalseiten des Faserverbundelements enden. Demnach werden die Hauptlasten an dem Zentralabschnitt benachbart des Lagerelements eingeleitet und über das Primärversteifungselement in Richtung der Schmalseiten des Steuerflächenelements abgeführt.

Die Lastverteilung in dem Steuerflächenelement kann in günstiger Weise berücksichtigt werden, wenn das Primärversteifungselement am Zentralabschnitt zur Aufnahme höherer Lasten als an den Seitenabschnitten eingerichtet ist.

Zu diesem Zweck ist es vorteilhaft, wenn der Zentralabschnitt des Primärversteifungselements eine größere Breite und/oder Höhe als die Seitenabschnitte des Primärversteifungselements aufweist.

Darüber hinaus kann vorteilhafterweise eine kontinuierliche Lastableitung erfolgen, wenn die Breite und/oder Höhe des Primärversteifungselements an den Seitenabschnitten nach außen hin abnimmt.

Darüber hinaus kann die Lastverteilung in dem Steuerflächenelement noch präziser berücksichtigt werden, wenn zumindest ein Tertiärversteifungselement als Verzweigung des Sekundärversteifungselements vorgesehen ist. Das Tertiärversteifungselement ist schwächer als das Sekundärversteifungselement ausgebildet. Zu diesem Zweck kann das Tertiärversteifungselement eine geringere Höhe und/oder Breite als das Sekundärversteifungselement aufweisen.

Gemäß einer bevorzugten Ausführungsvariante ist der Zentralabschnitt des Primärversteifungselements auf einer vom Lagerelement abgewandten Rückseite mit zwei im Wesentlichen V-förmig angeordneten, in Richtung der hinteren Längskante des Faserverbundelements auseinanderlaufenden Sekundärversteifungselementen verbunden ist. Bei dieser Ausführung wird daher der Kraftfluss auf der Rückseite des Primärversteifungselements aufgenommen, auf die zwei V-förmig auseinanderlaufenden Sekundärversteifungselementen aufgespalten und nach hinten abgeleitet.

Zur Anpassung an das bei Belastung auftretende Lastprofil ist es günstig, wenn die Höhe und/oder Breite der V-förmig angeordneten Sekundärversteifungselemente zur hinteren Längskante des Faserverbundelements hin abnimmt. Dadurch kann zudem eine besonders platzsparende Ausführung geschaffen werden, mit welcher die Einbausituation berücksichtigt wird.

Um die verbleibenden Lasten aufzufangen, ist es vorteilhaft, wenn von den V-förmig angeordneten Sekundärversteifungselementen an der Rückseite des Primärversteifungselements jeweils zumindest ein Tertiärversteifungselement nach innen absteht. Diese Tertiärversteifungselemente sind vorzugsweise im Wesentlichen V-förmig, in Richtung der hinteren Längskante des Faserverbundelementes zusammenlaufend angeordnet. Dadurch wird eine Doppel-V-Versteifungsstruktur erhalten, welche sich zur Kompensation von Belastungen in Richtung der kürzeren Erstreckung des Steuerflächenelements (d.h. in Querrichtung) besonders gut eignet.

Gemäß einer alternativen bevorzugten Ausführungsvariante ist zumindest ein im Wesentlichen parallel zum Primärversteifungselement verlaufendes Sekundärversteifungselement vorgesehen, welches über einen insbesondere in Querrichtung des Faserverbundelements erstreckten Verbindungssteg mit dem Primärversteifungselement verbunden ist. Bei dieser Ausführung ist das Sekundärversteifungselement entsprechend dem Primärversteifungselement geformt, jedoch hinsichtlich der geringeren Lastaufnahmefähigkeit mit einer geringeren Breite bzw. Höhe ausgebildet. Der Verbindungssteg ermöglicht eine Lastabtragung zwischen dem Primär- und dem Sekundärversteifungselement, wobei der Verbindungssteg vorzugsweise in Querrichtung des Steuerflächenelements, d.h. bei einer Bremsklappe im Wesentlichen in Flugrichtung, erstreckt ist.

Zur Aussteifung des insbesondere plattenförmigen Steuerflächenelements ist es bei dieser Ausführung besonders günstig, wenn zwei bogenförmige Sekundärversteifungselemente mit zur hinteren Längskante hin abnehmender Höhe vorgesehen sind, welche über einen keilförmig zur hinteren Längskante hin verjüngten Verbindungssteg miteinander und mit dem Primärversteifungselement verbunden sind.

Zur integralen Ausbildung des Primärversteifungselements an dem Steuerflächenelement ist es günstig, wenn das Faserverbundelement eine Einbuchtung aufweist. Für die Zwecke dieser Offenbarung wird unter der integralen bzw. einteiligen Ausbildung des Versteifungselements verstanden, dass das Versteifungselement zusammen mit dem Faserverbundelement in Faserverbundbauweise hergestellt wird. Im Unterschied dazu werden bei einer zweiteiligen Ausführung eigene Faserverbundbauteile erzeugt, welche danach auf geeignete Weise, beispielsweise über Klebeverbindungen, miteinander verbunden werden.

Entsprechend ist es günstig, wenn das Faserverbundelement zur integralen Ausbildung des zumindest einen Sekundärversteifungselements eine Vertiefung aufweist. Besonders bevorzugt ist es, wenn sämtliche Primär- und Sekundärversteifungselemente integral, d.h. in demselben Prozess bzw. unter gleichzeitiger Aushärtung, mit dem flächigen bzw. plattenförmigen Faserverbundelement gebildet sind. Einzelne Sekundärversteifungselemente können jedoch auch als eigene Bauteile, insbesondere Faserverbundbauteile, vorgesehen sein, welche mit dem plattenförmigen Faserverbundelement beispielsweise über eine Klebeverbindung verbunden sind.

Hinsichtlich einer integralen Bauweise ist es zudem vorteilhaft, wenn das Lagerelement zur beweglichen Verbindung mit dem Strukturbauteil integral mit dem Faserverbundelement gebildet ist.

Zur Erzielung des Steuerflächenelements ist es günstig, wenn das Faserverbundelement eine untere Außenhaut mit der Versteifungsstruktur und eine obere Außenhaut mit der luftumströmten Oberfläche aufweist. Die obere Außenhaut ist hierbei flächig bzw. plattenförmig ausgebildet. Die untere Außenhaut ist ebenfalls flächig bzw. plattenförmig ausgebildet, wobei davon die Versteifungsstruktur insbesondere in Form von Einbuchtungen bzw. Vertiefungen vorspringt. Die untere und die obere Außenhaut werden als Faserverbundbauteile vorgefertigt und danach auf geeignete Weise über Klebeverbindungen bzw. mechanische Verbindungen miteinander verbunden. Bei dieser Ausführungsvariante ist vorteilhaft, wenn nur die untere Außenhaut die Versteifungselemente aufweist, jedoch die obere Außenhaut frei von Versteifungselementen ist. Dadurch kann eine besonders einfache Ausführung geschaffen werden.

Die Erfindung wird nachstehend anhand bevorzugter Ausführungsbeispiele, auf die sie jedoch nicht beschränkt sein soll, noch weiter erläutert. In der Zeichnung zeigen:
Fig. 1 eine schaubildliche Ansicht der Unterseite einer aus faserverstärktem Kunststoffmaterial gefertigten unteren Außenhaut für ein erfindungsgemäßes Steuerflächenelement, wobei eine Versteifungsstruktur mit einem länglichen Primärversteifungselement in der Art eines Rückgrates ersichtlich ist, von welchem diverse Sekundärversteifungselemente abgezweigt sind;
Fig. 2 eine schaubildliche Ansicht der Oberseite der in Fig. 1 gezeigten unteren Außenhaut, wobei die integrale Ausbildung der Primär- und Sekundärversteifungselemente als Vertiefungen der Außenhaut ersichtlich ist;
Fig. 3 eine schaubildliche Ansicht des erfindungsgemäßen Steuerflächenelements gemäß Fig. 1, 2 mit Blick auf eine obere Außenhaut;
Fig. 4 eine schaubildliche Ansicht einer alternativen Ausführung der unteren Außenhaut, bei welchem das Primärversteifungselement ausgehend von einem verbreiterten Zentralabschnitt geradlinig nach außen verjüngt ist;
Fig. 5 eine schaubildliche Ansicht einer weiteren alternativen Ausführung der unteren Außenhaut mit einem bogenförmig verlaufenden Primärversteifungselement, welches über einen keilförmigen Verbindungssteg mit zwei ebenfalls bogenförmig verlaufenden Sekundärversteifungselementen verbunden ist;
Fig. 6 eine schaubildliche Ansicht einer weiteren Ausführung der unteren Außenhaut, bei welchem das Primärversteifungselement an den Seitenabschnitten keilförmig nach außen zusammenläuft und bei welchem stegförmige Sekundärversteifungselemente vorgesehen sind.

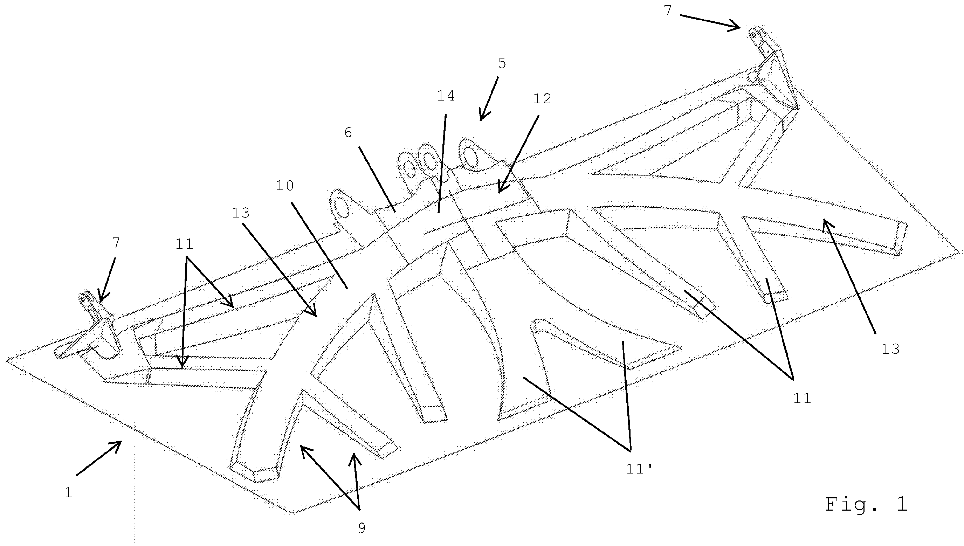

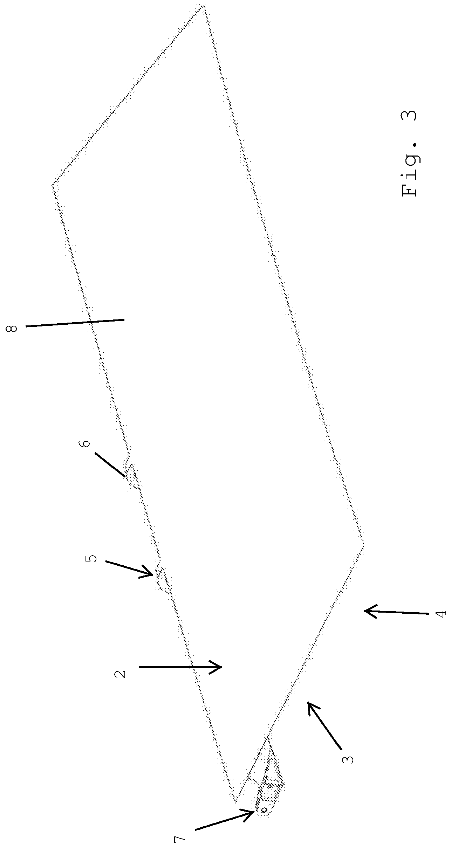

In den Fig. 1 bis 3 ist eine erste Ausführung einer unteren Außenhaut 1 gezeigt, welche zusammen mit einer oberen Außenhaut 2 (vgl. Fig. 3) ein Faserverbundelement 3 für ein Steuerflächenelement 4 im Flugzeugbau bildet. Die obere und die untere Außenhaut sind beispielsweise im RTM-Verfahren aus faserverstärktem Kunststoff gefertigt. In der gezeigten Ausführung ist das Steuerflächenelement 4 als Störklappe bzw. Spoiler für ein Flugzeug ausgebildet. Entsprechende Ausführungen können jedoch auch bei anderen luftumströmten Oberflächen von Flugzeugen (beispielsweise bei Rudern) vorgesehen sein. Das Steuerflächenelement 4 weist eine Lagereinrichtung 5 zur gelenkigen Lagerung des Faserverbundelements 3 an einem Strukturbauteil, nämlich an einem Flugzeugflügelkasten, auf. Die Lagereinrichtung 5 weist ein mittig an einer vorderen Längskante des Faserverbundelements vorgesehenes Lagerelement 6 auf. Die Begriffe "vorne", "hinten", "oben", "unten" beziehen sich für die Zwecke dieser Offenbarung auf den bestimmungsgemäßen Betriebszustand des Steuerflächenelements 4. Das Steuerflächenelement ist in Draufsicht im Wesentlichen rechteckig (vgl. Fig. 3), so dass eine Längserstreckung (bei der Störklappe in Richtung der Flügelachse) und eine Quererstreckung (bei der Störklappe im Wesentlichen senkrecht zur Flügelachse) ausgebildet ist. Die Lagereinrichtung 5 weist seitlich an der Vorderkante weitere Lagerelemente 7 auf. Da die Ausgestaltung der Lagereinrichtung 5 im Stand der Technik hinlänglich bekannt ist, kann auf nähere Ausführungen dazu verzichtet werden (vgl. dazu beispielsweise auch die AT 409 482 B). An der Oberseite des Steuerflächenelements 4 ist eine aerodynamische, im Wesentlichen ebene luftumströmte Oberfläche 8 vorgesehen, welche durch die Oberseite der oberen Außenhaut 2 gebildet ist.

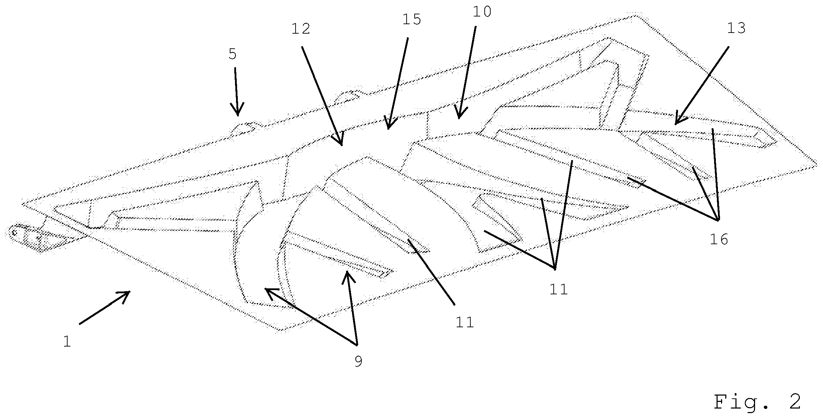

Wie aus Fig. 1, 2 ersichtlich, weist die untere Außenhaut 1 eine Versteifungsstruktur 9 zur Aussteifung des Faserverbundelements 3 auf. Die Versteifungsstruktur 9 weist diverse Versteifungselemente auf, welche nachstehend weiter erläutert werden. Zumindest ein Versteifungselement ist integral, d.h. im selben Herstellungsprozess, bei gleichzeitiger Aushärtung mit dem Faserverbundelement 3 gebildet.

Wie aus Fig. 1, 2 weiters ersichtlich, weist die Versteifungsstruktur 9 ein Primärversteifungselement 10 auf, welches mit mehreren zur Aufnahme von Nebenlasten eingerichteten Sekundärversteifungselementen 11 verbunden ist. Das Primärversteifungselement 10 weist zur Aufnahme der Hauptlast eine größere Breite als die Sekundärversteifungselemente 11 auf. Die Breite bezieht sich hierbei auf die kürzere Erstreckung der länglichen Primär- bzw. Sekundärversteifungselemente 10, 11. Das Primärversteifungselement 10 weist einen Zentralabschnitt 12 auf, welcher direkt an das mittige Lagerelement 6 an der Vorderkante des Steuerflächenelements 4 angrenzt. Darüber hinaus weist das Primärversteifungselement 10 zwei Seitenabschnitte 13 auf, welche sich ausgehend von dem Zentralabschnitt 12 in Richtung zu den Schmalseiten (d.h. den kürzeren Seiten) der unteren Außenhaut 1 hin erstrecken. In der gezeigten Ausführung enden die Seitenabschnitte 13 des Primärversteifungselements 10 benachbart der Schmalseiten der unteren Außenhaut 1 des Steuerflächenelements 4. Um das Primärversteifungselement 10 am Zentralabschnitt 12 zur Aufnahme höherer Lasten als an den Seitenabschnitten 13 einzurichten, nimmt die Höhe des Primärversteifungselements 10 vom Zentralabschnitt 12 nach außen hin ab. Darüber hinaus weist das Primärversteifungselement 10 in der gezeigten Ausführung am Zentralabschnitt 12 eine konvexe Ausbuchtung 14 auf, welche an die Gestalt des mittleren Lagerelements 6 angepasst ist. Die Sekundärversteifungselemente 11 sind als Abzweigungen des Primärversteifungselements 10 ausgebildet, welche vom Zentralabschnitt 12 und von den Seitenabschnitten 13 ausgehen.

In der Ausführung gemäß Fig. 1 bis 3 ist der Zentralabschnitt 12 des Primärversteifungselements 10 auf einer vom Lagerelement 6 abgewandten Rückseite mit zwei im Wesentlichen V-förmig angeordneten, in Richtung der hinteren Längskante des Faserverbundelements 3 auseinanderlaufenden Sekundärversteifungselementen 11' verbunden. Diese gabelförmigen Sekundärversteifungselemente 11' bewirken eine Lastabtragung in Querrichtung des Steuerflächenelements 4. Die Höhe der V-förmig angeordneten Sekundärversteifungselemente 11' nimmt zur hinteren Längskante des Faserverbundelements 3 hin ab.

Wie aus Fig. 2 ersichtlich, weist die untere Außenhaut 1 des Faserverbundelements 3 zur integralen Ausbildung des Primärversteifungselements eine Einbuchtung 15 auf. Entsprechend weist die untere Außenhaut 1 des Faserverbundelements 1 zur integralen Ausbildung der Sekundärversteifungselemente 11 entsprechende Vertiefungen 16 auf. Demnach weist die untere Außenhaut 1 im Bereich der Versteifungsstruktur 9 eine im Wesentlichen gleichbleibende Wandstärke auf. In der gezeigten Ausführung sind sämtliche Versteifungselemente 10, 11 an der unteren Außenhaut 1 integral ausgebildet. Darüber hinaus kann auch das mittige Lagerelement 6 zur beweglichen Verbindung mit dem Flugzeugflügel integral mit der unteren Außenhaut 1 gebildet sein. Die weiteren Lagerelemente 7 an den Seiten sind in der gezeigten Ausführung als Beschläge, insbesondere aus Metall, an der Unterseite der unteren Außenhaut 1 angebracht.

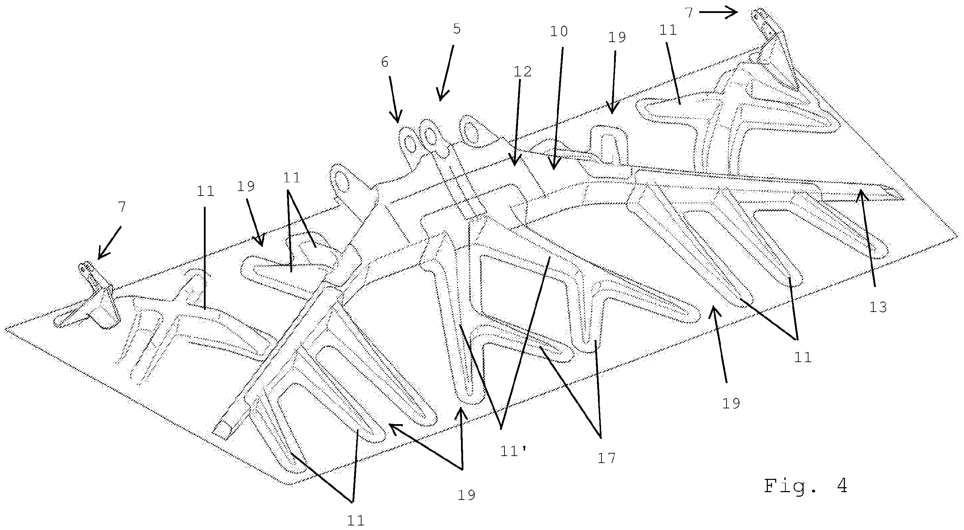

Fig. 4 zeigt eine alternative Ausführung der unteren Außenhaut 1. Bei dieser Ausführung sind ebenfalls V-förmige bzw. gabelförmige Sekundärversteifungselemente 11' an der Rückseite des Zentralabschnitts 12 des Primärversteifungselements 10 vorgesehen. Darüber hinaus steht bei dieser Ausführung von den V-förmig angeordneten Sekundärversteifungselementen 11' jeweils genau ein Tertiärversteifungselement 17 nach innen ab. Die Tertiärversteifungselemente 17 sind daher als Verzweigungen der V-förmigen Sekundärversteifungselements 11' ausgebildet. Die Rückseite des Zentralabschnitts 12 des Primärversteifungselements 10 ist hier geradlinig, in Längsrichtung des Steuerflächenelements 4 angeordnet. Die Breite bzw. Quererstreckung und die Höhe bzw. vertikale Erstreckung des Primärversteifungselements 10 nimmt an den Seitenabschnitten 13 nach außen kontinuierlich ab.

Wie aus Fig. 4 weiters ersichtlich, sind bei dieser Ausführung eigene Faserverbundbauteile 19 zur Ausbildung je einer Gruppe von Sekundärversteifungselementen 11 vorgesehen. Die Faserverbundbauteile 19 sind auf geeignete Weise, insbesondere über Klebeverbindungen, mit der unteren Außenhaut 1 verbunden, an welcher das Primärversteifungselement 10 integral ausgebildet ist.

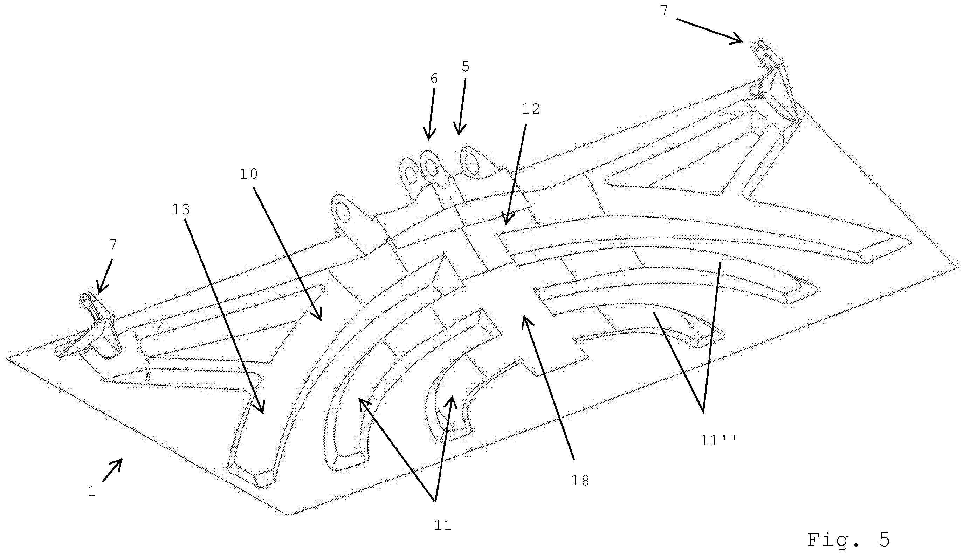

Fig. 5 zeigt eine weitere Ausführung der unteren Außenhaut 1, bei welcher ein bogenförmiges Primärversteifungselement 10 vorgesehen ist. Darüber hinaus sind zwei im Wesentlichen parallel zum Primärversteifungselement verlaufende, ebenfalls bogenförmige Sekundärversteifungselemente 11" vorgesehen, welche über einen in Querrichtung des Steuerflächenelements 4 verlaufenden Verbindungssteg 18 mit dem Primärversteifungselement 10 verbunden sind. Die zwei bogenförmigen Sekundärversteifungselemente 11" weisen eine zur hinteren Längskante hin abnehmende Höhe auf. Darüber hinaus ist der Verbindungssteg 18 zur hinteren Längskante hin verjüngt ausgebildet.

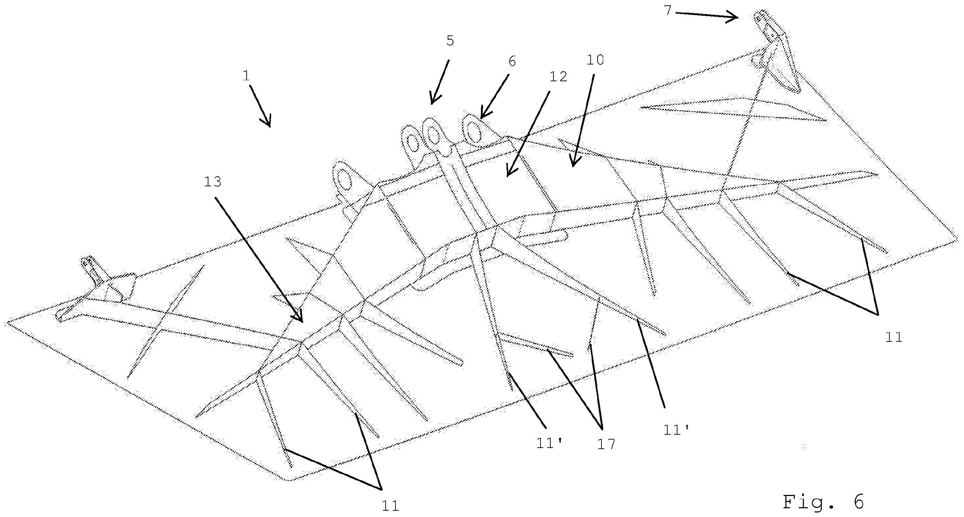

Fig. 6 zeigt eine weitere Ausführung der unteren Außenhaut 1, bei welcher das Primärversteifungselement 10 keilförmig zu den Schmalseiten des Steuerflächenelements zusammenläuft. Darüber hinaus sind diverse steg- bzw. wandförmige Sekundärversteifungselemente 11 vorgesehen, welche an das Primärversteifungselement 10 angrenzen. Wie bei der Ausführung der Fig. 4 sind die V-förmig angeordneten Sekundärversteifungselemente 11 mit Tertiärversteifungselementen 17 verbunden. Bei dieser Ausführung sind die Sekundärversteifungselemente 11, welche auch einen I-förmigen, L-förmigen oder T-förmigen Querschnitt haben können, im Querschnitt voll ausgebildet, im Unterschied zu den zuvor beschriebenen Sekundärversteifungselemente 11 in Form von Vertiefungen der unteren Außenhaut 1. Die Sekundärversteifungselemente 11 sind bevorzugt integral bzw. einteilig an dem Faserverbundelement ausgebildet.

## Patentansprüche

1. Steuerflächenelement (4) für ein Flugzeug, insbesondere Störklappe, mit einem eine luftumströmte Oberfläche (8) aufweisenden Faserverbundelement (3), mit einer Lagereinrichtung (5) zur beweglichen Lagerung des Faserverbundelements (3) an einem Strukturbauteil, und mit einer Versteifungsstruktur (9) zur Aussteifung des Faserverbundelements (3), wobei die Versteifungsstruktur (9) zumindest ein integral mit dem Faserverbundelement (3) gebildetes Versteifungselement aufweist, wobei die Versteifungsstruktur (9) ein zur Aufnahme von Hauptlasten eingerichtetes Primärversteifungselement (10) aufweist, welches mit zumindest einem zur Aufnahme von Nebenlasten eingerichteten Sekundärversteifungselement (11; 11', 11'') verbunden ist, wobei das Faserverbundelement (3) zur integralen Ausbildung des Primärversteifungselements (10) eine Einbuchtung (15) aufweist, wobei das Primärversteifungselement (10) eine größere Breite und/oder eine größere Höhe als das Sekundärversteifungselement (11; 11', 11") aufweist, **dadurch gekennzeichnet, dass** das Sekundärversteifungselement (11; 11', 11'') als Abzweigung des Primärversteifungselements (10) ausgebildet ist.

2. Steuerflächenelement (4) nach Anspruch 1, **dadurch gekennzeichnet, dass** die Lagereinrichtung (5) ein im Wesentlichen mittig an einer vorderen Längskante des Faserverbundelements (3) vorgesehenes Lagerelement (6) aufweist, an welches ein Zentralabschnitt (12) des Primärversteifungselements (10) anschließt.

3. Steuerflächenelement (4) nach Anspruch 2, **dadurch gekennzeichnet, dass** das Primärversteifungselement (10) von dem Zentralabschnitt (12) zu Schmalseiten des Faserverbundelements (3) hin verlaufende Seitenabschnitte (13) aufweist.

4. Steuerflächenelement (4) nach Anspruch 3, **dadurch gekennzeichnet, dass** die Seitenabschnitte (13) des Primärversteifungselements (10) benachbart der Schmalseiten des Faserverbundelements (3) enden.

5. Steuerflächenelement (4) nach Anspruch 3 oder 4, **dadurch gekennzeichnet, dass** das Primärversteifungselement (10) am Zentralabschnitt (12) zur Aufnahme höherer Lasten als an den Seitenabschnitten (13) eingerichtet ist, wobei der Zentralabschnitt (12) des Primärversteifungselements (10) bevorzugt eine größere Breite und/oder Höhe als die Seitenabschnitte (13) des Primärversteifungselements (10) aufweist.

6. Steuerflächenelement (4) nach einem der Ansprüche 2 bis 5, **dadurch gekennzeichnet, dass** die Breite und/oder Höhe des Primärversteifungselements (10) an den Seitenabschnitten (13) nach außen hin abnimmt.

7. Steuerflächenelement (4) nach einem der Ansprüche 1 bis 6, **dadurch gekennzeichnet, dass** zumindest ein Tertiärversteifungselement (17) als Verzweigung des Sekundärversteifungselements (11; 11', 11") vorgesehen ist.

8. Steuerflächenelement (4) nach einem der Ansprüche 1 bis 7, **dadurch gekennzeichnet, dass** der Zentralabschnitt (12) des Primärversteifungselements (10) auf einer vom Lagerelement (6) abgewandten Rückseite mit zwei im Wesentlichen V-förmig angeordneten, in Richtung der hinteren Längskante des Faserverbundelements (3) auseinanderlaufenden Sekundärversteifungselementen (11') verbunden ist.

9. Steuerflächenelement (4) nach Anspruch 8, **dadurch gekennzeichnet, dass** die Höhe und/oder Breite der V-förmig angeordneten Sekundärversteifungselemente (11') zur hinteren Längskante des Faserverbundelements (3) hin abnimmt.

10. Steuerflächenelement (4) nach Anspruch 9, **dadurch gekennzeichnet, dass** von den V-förmig angeordneten Sekundärversteifungselementen (11') an der Rückseite des Primärversteifungselements (10) jeweils zumindest ein Tertiärversteifungselement (17) nach innen absteht.

11. Steuerflächenelement (4) nach einem der Ansprüche 1 bis 10, **dadurch gekennzeichnet, dass** zumindest ein im Wesentlichen parallel zum Primärversteifungselement (10) verlaufendes Sekundärversteifungselement (11") vorgesehen ist, welches über einen insbesondere in Querrichtung des Faserverbundelements erstreckten Verbindungssteg (18) mit dem Primärversteifungselement (10) verbunden ist.

12. Steuerflächenelement (4) nach Anspruch 11, **dadurch gekennzeichnet, dass** zwei bogenförmige Sekundärversteifungselemente (11") mit zur hinteren Längskante hin abnehmender Höhe vorgesehen sind, welche über einen keilförmig zur hinteren Längskante hin verjüngten Verbindungssteg (18) miteinander und mit dem Primärversteifungselement (10) verbunden sind.

13. Steuerflächenelement (4) nach einem der Ansprüche 1 bis 12, **dadurch gekennzeichnet, dass** das Faserverbundelement (3) zur integralen Ausbildung des zumindest einen Sekundärversteifungselements (11; 11', 11'') eine Vertiefung (16) aufweist.

14. Steuerflächenelement (4) nach einem der Ansprüche 2 bis 13, **dadurch gekennzeichnet, dass** das Lagerelement (6) zur beweglichen Verbindung mit dem Strukturbauteil integral mit dem Faserverbundelement (3) gebildet ist.

15. Steuerflächenelement (4) nach einem der Ansprüche 1 bis 14, **dadurch gekennzeichnet, dass** das Faserverbundelement (3) eine untere Außenhaut (1) mit der Versteifungsstruktur (9) und eine obere Außenhaut (2) mit der luftumströmten Oberfläche (8) aufweist.

## Claims

1. Control surface element (4) for an aircraft, in particular a spoiler, comprising a fibre composite element (3) having a surface (8) around which air flows, comprising a mounting means (5) for movably mounting the fibre composite element (3) on a structural component, and comprising a bracing structure (9) for bracing the fibre composite element (3), the bracing structure (9) comprising at least one bracing element integrally formed with the fibre composite element (3), the bracing structure (9) comprising a primary bracing element (10) which is designed to receive main loads and is connected to at least one secondary bracing element (11; 11', 11") designed to receive secondary loads, the fibre composite element (3) comprising an indentation (15) for integrally forming the primary bracing element (10), the primary bracing element (10) having a greater width and/or a greater height than the secondary bracing element (11; 11', 11"), **characterised in that** the secondary bracing element (11; 11', 11") is designed as a branch-off of the primary bracing element (10).

2. Control surface element (4) according to claim 1, **characterised in that** the mounting means (5) comprises a mounting element (6) which is provided substantially centrally on a front longitudinal edge of the fibre composite element (3) and adjoins a central portion (12) of the primary bracing element (10).

3. Control surface element (4) according to claim 2, **characterised in that** the primary bracing element (10) comprises lateral portions (13) extending from the central portion (12) towards short sides of the fibre composite element (3).

4. Control surface element (4) according to claim 3, **characterised in that** the lateral portions (13) of the primary bracing element (10) end adjacent to the short sides of the fibre composite element (3).

5. Control surface element (4) according to either claim 3 or claim 4, **characterised in that** the primary bracing element (10) is designed to receive greater loads on the central portion (12) than on the lateral portions (13), the central portion (12) of the primary bracing element (10) having preferably a greater width and/or height than the lateral portions (13) of the primary bracing element (10).

6. Control surface element (4) according to any of claims 2 to 5, **characterised in that** the width and/or height of the primary bracing element (10) decreases outwardly on the lateral portions (13).

7. Control surface element (4) according to any of claims 1 to 6, **characterised in that** at least one tertiary bracing element (17) is provided as a branch of the secondary bracing element (11; 11', 11").

8. Control surface element (4) according to any of claims 1 to 7, **characterised in that** the central portion (12) of the primary bracing element (10) is connected, on a rear face facing away from the mounting element (6), to two secondary bracing elements (11') which are arranged substantially in a V shape and diverge towards the rear longitudinal edge of the fibre composite element (3).

9. Control surface element (4) according to claim 8, **characterised in that** the height and/or width of the secondary bracing elements (11') arranged in a V shape decrease towards the rear longitudinal edge of the fibre composite element (3).

10. Control surface element (4) according to claim 9, **characterised in that**, on the rear face of the primary bracing element (10), at least one tertiary bracing element (17) projects inwardly from each of the secondary bracing elements (11') arranged in a V shape.

11. Control surface element (4) according to any of claims 1 to 10, **characterised in that** at least one secondary bracing element (11") extending substantially in parallel with the primary bracing element (10) is provided and is connected to the primary bracing element (10) by means of a connection strip (18) extending in particular in the transverse direction of the fibre composite element.

12. Control surface element (4) according to claim 11, **characterised in that** two arcuate secondary bracing elements (11") having a height that decreases towards the rear longitudinal edge are provided, which are connected to one another and to the primary bracing element (10) by means of a connection strip (18) having a wedge shape that tapers towards the rear longitudinal edge.

13. Control surface element (4) according to any of claims 1 to 12, **characterised in that** the fibre composite element (3) comprises a recess (16) for integrally forming the at least one secondary bracing element (11; 11', 11").

14. Control surface element (4) according to any of claims 2 to 13, **characterised in that** the mounting element (6) is integrally formed with the fibre composite element (3) so as to be movably connected to the structural component.

15. Control surface element (4) according to any of claims 1 to 14, **characterised in that** the fibre composite element (3) comprises a lower outer skin (1) having the bracing structure (9), and an upper outer skin (2) having the surface (8) around which air flows.

## Revendications

1. Élément de surface de commande (4) pour un avion, plus particulièrement un spoiler, avec un élément en fibre composite (3) comprenant une surface entourée d'un écoulement d'air (8), avec un dispositif de palier (5) pour le logement mobile de l'élément en fibre composite (3) au niveau d'un composant de la structure, et avec une structure de rigidification (9) pour la rigidification de l'élément en fibre composite (3), la structure de rigidification (9) comprenant au moins un élément de rigidification formé d'une seule pièce avec l'élément en fibre composite (3), la structure de rigidification (9) comprenant un élément de rigidification primaire (10) conçu pour l'absorption des charges principales, qui est relié avec au moins un élément de rigidification secondaire (11 ; 11' ; 11") conçu pour l'absorption des charges secondaires, l'élément en fibre composite (3) comprenant, pour la formation en une seule pièce de l'élément de rigidification primaire (10), une échancrure (15), l'élément de rigidification primaire (10) présentant une largeur et/ou une hauteur supérieure à celle de l'élément de rigidification secondaire (11 ; 11'; 11"), **caractérisé en ce que** l'élément de rigidification secondaire (11 ; 11'; 11") est conçu comme un embranchement de l'élément de rigidification primaire (10).

2. Élément de surface de commande (4) selon la revendication 1, **caractérisé en ce que** le dispositif de palier (5) comprend un élément de palier (6), disposé globalement au centre sur une arête longitudinale de l'élément en fibre composite (3), auquel se raccorde une portion centrale (12) de l'élément de rigidification primaire (10).

3. Élément de surface de commande (4) selon la revendication 2, **caractérisé en ce que** l'élément de rigidification primaire (10) comprend des portions latérales (13) s'étendant à partir de la portion centrale (12) en direction de côtés étroits de l'élément en fibre composite (3).

4. Élément de surface de commande (4) selon la revendication 3, **caractérisé en ce que** les portions latérales (13) de l'élément de rigidification primaire (10) se terminent à proximité des côtés étroits de l'élément en fibre composite (3).

5. Élément de surface de commande (4) selon la revendication 3 ou 4, **caractérisé en ce que** l'élément de rigidification primaire (10) est conçu, sur la portion centrale (12), pour l'absorption de charges plus élevées que sur les portions latérales (13), la portion centrale (12) de l'élément de rigidification primaire (10) présentant de préférence une largeur et/ou une hauteur supérieure à celle des portions latérales (13) de l'élément de rigidification primaire (10).

6. Élément de surface de commande (4) selon l'une des revendications 2 à 5, **caractérisé en ce que** la largeur et/ou la hauteur de l'élément de rigidification primaire (10), au niveau des portions latérales (13), diminue en direction de l'extérieur.

7. Élément de surface de commande (4) selon l'une des revendications 1 à 6, **caractérisé en ce qu'**au moins un élément de rigidification tertiaire (17) est prévu sous la forme d'un embranchement de l'élément de rigidification secondaire (11 ; 11' ; 11").

8. Élément de surface de commande (4) selon l'une des revendications 1 à 7, **caractérisé en ce que** la portion centrale (12) de l'élément de rigidification primaire (10) est relié, sur un côté arrière opposé à l'élément de palier (6), avec deux éléments de rigidification secondaires (11') disposés globalement en forme de V et s'écartant en direction de l'arête longitudinale arrière de l'élément en fibre composite (3).

9. Élément de surface de commande (4) selon la revendication 8, **caractérisé en ce que** la hauteur et/ou la largeur des éléments de rigidification secondaires (11') disposés en forme de V diminue en direction de l'arête longitudinale arrière de l'élément en fibre composite (3).

10. Élément de surface de commande (4) selon la revendication 9, **caractérisé en ce qu'**un élément de rigidification tertiaire (17) fait saillie vers l'intérieur de chacun des éléments de rigidification secondaires (11') disposés en forme de V sur le côté arrière de l'élément de rigidification primaire (10).

11. Élément de surface de commande (4) selon l'une des revendications 1 à 10, **caractérisé en ce qu'**au moins un élément de rigidification secondaire (11") s'étendant globalement parallèlement à l'élément de rigidification primaire (10) est prévu, et est relié, par l'intermédiaire d'une nervure de liaison (18) s'étendant dans la direction transversale de l'élément en composte à fibres, avec l'élément de rigidification primaire (10).

12. Élément de surface de commande (4) selon la revendication 11, **caractérisé en ce que** deux éléments de rigidification secondaires (11"), en forme d'arcs de cercles, avec une hauteur diminuant en direction de l'arête longitudinale arrière, sont prévus et sont reliés entre eux et avec l'élément de rigidification primaire (10) par l'intermédiaire d'une nervure de liaison (18) se rétrécissant de manière cunéiforme en direction de l'arête longitudinale arrière.

13. Élément de surface de commande (4) selon l'une des revendications 1 à 12, **caractérisé en ce que** l'élément en fibre composite (3) comprend une cavité (16) pour la formation en une seule pièce de l'au moins un élément de rigidification secondaire (11 ; 11'; 11").

14. Élément de surface de commande (4) selon l'une des revendications 2 à 13, **caractérisé en ce que** l'élément de palier (6) est conçu pour la liaison mobile avec le composant de structure d'une seule pièce avec l'élément en fibre composite (3).

15. Élément de surface de commande (4) selon l'une des revendications 1 à 14, **caractérisé en ce que** l'élément en fibre composite (3) comprend une enveloppe externe inférieure (1) avec la structure de rigidification (9) et une enveloppe externe supérieure (2) avec la surface entourée d'un écoulement d'air (8).
